# EUROPEAN PATENT APPLICATION

(11) **EP 3 793 130 A1**
(43) Date of publication of application: **17.03.2021**
(21) Application number: 19197425.2
(22) Date of filing: 14.09.2019
(51) Int. Cl.: H04L 9/32, H04L 9/08

(54) **SECURE DECENTRALIZED CLOUD COMPUTING WITH PRIVACY CONTROLS**

(71) Applicant: Ethernity Hodl UG, 83671 Benediktbeuern Bayern (DE)
(72) Inventor:

(57) **Abstract**

It is an object of the invention to provide a decentralized cloud computing system which protects data privacy while user's data is being transferred, stored or processed within the ecosystem. Currently, cloud computing users have to trust their cloud computing provider in regard to how their private data is handled. Moreover, usually there is no way to verify technically how the data was processed without a very complicated process. The invention leverages distributed ledger technology, commonly referred as blockchain technology, to record metadata about each cloud computing service request and each cloud service provider offer. Using cryptographic methods, the data is protected while in transit and at rest when is transferred from the user to the service provider. Using trusted execution environment technology, an enclave is used to protect data privacy while it is being processed by the service provider.

## Description

### TECHNICAL FIELD

The disclosed relates to blockchain technology, security mechanisms, and cloud computing infrastructure. It is particularly suited for use as a mechanism of securing software execution in a decentralized cloud infrastructure spread across a plurality of computing devices while enforcing the three principles of information security: confidentiality, integrity, availability

### BACKGROUND

In this document we use the term "blockchain solution" to refer to a system comprising a distributed ledger, the software that operates the data on the distributed ledger, a plurality of devices that share the ledger information and/or operate the data on the distributed ledger via operations referred as blockchain transactions.

In this document we use the term "software payload" to refer to a software process and its related information which may comprise the data stored on a computing device storage, the data stored in a computing device memory, the data that is being transmitted over a communication network and the data that is being received over a communication network.

In this document we use the term "payload processor" to refer to an entity that processes software payloads acting as a what is commonly referred as, a cloud service provider. Hereafter, the term "hypervisor software" refers to a computer program, software, or software module ran by the payload processor to interact with the blockchain solution.

Decentralized cloud computing refers to an information processing technology that enables users to execute a software payload without having to provide, maintain or manipulate, an underlying hardware infrastructure, regardless of the identity of the payload processor performing the software execution.

In contrast to the regular cloud, the software execution requests are not honored by a specific payload processor and instead the payload processor is determined automatically and most likely it is determined by the blockchain solution based on predefined rules, commonly known as a "smart contract".

Any discussion of documents, acts, materials, devices, articles or the like which have been included in the present specification is not to be taken as an admission that any or all of these matters from part of the prior art base or where common general knowledge in the field relevant to the present disclosure as it existed before the priority date of each claim on this application.

Throughout this specification the word "comprise", or variations such as "comprises" or "comprising", will be understood to imply the inclusion of a stated element, integer or step, or group of elements, integers or steps, but not the exclusion of any other element, integer or step, or group of elements, integers or steps.

### SUMMARY

Embodiments of the invention may comprise a method and corresponding system operating a decentralized cloud infrastructure that safeguard the user's privacy and the software payload's confidentiality, integrity and availability while is being executed by the payload processor.

One embodiment may comprise one or more blockchain solutions which store users requests for service as well as payload processors service offers and their associated metadata. The user's requests and payload processor's offers are compared and when matches are found, the software payload may be securely transferred to the one or more payload processors and executed.

One or more embodiments may comprise cryptographic methods or other computer-implemented methods that may enforce the requesting user's privacy controls and may also enforce the requested security controls that safeguard software payload's confidentiality, integrity and availability while a payload processor is providing the requested services.

The invention may be described as a security method/system for securing a software payload integrity when executed in a decentralized manner. The invention may be described as a method/system for securing a software payload confidentiality when executed in a decentralized manner.

The invention may be described as a method/system for securing a software payload availability when executed in a decentralized manner. The invention may be described as a method/system for securing user's privacy when executing a software payload in a decentralized manner.

Other embodiments of the invention may include a software component, module, plug-in or extension for the hypervisor software. Other embodiments of the invention may include a device running the hypervisor software and the hypervisor software.

### BRIEF DESCRIPTION OF DRAWINGS

Fig. 1 Depicts a cloud computing ecosystem according to an embodiment of the present invention
Fig. 2 Depicts a cloud computing payload processor node (hardware) with integrated storage according to an embodiment of the present invention
Fig. 3 Depicts a cloud computing payload processor node (hardware) with external storage according to an embodiment of the present invention
Fig. 4 Is a flow diagram of a process being performed by the user at the blockchain level to maintain software payload confidentiality.
Fig. 5 Is a flow diagram of a process being performed by payload processor at the blockchain level to maintain software payload confidentiality.
Fig. 6 Is a flow diagram of a process being performed to keep software payload integrity when uploading data.
Fig. 7 Is a flow diagram of a processes being performed for validating software payload integrity.

### DETAILED DESCRIPTION

In the prior art decentralized cloud user's applications and data are being transferred to a most likely unknown payload processor hardware. On the payload processor hardware, a virtual container or a virtual machine is being provisioned automatically and the user's data is transferred on it and then the software runs according to user's preferences.

Most of the cloud computing platforms offer encryption possibilities for the virtual storage, however the locking and unlocking operations are performed locally, therefore these operations are in control of the payload processor.

Due to the decentralized nature of the system, it is very difficult to control or to restrict the bad actors operating as payload processors. Anyone can become a payload processor and make their computing resources available for exploitable users. These bad actors have full access to see all the data that is stored on their hardware, including but not limited to: database passwords, administrative passwords hashes, SSL private keys.

Moreover, a bad actor operating as a payload processor can modify user's data and introduce viruses or malware as there is no security mechanism in place preventing them from doing so. In addition to this issue, the bad actors can act as man in the middle and snoop on the connections and the network activity of the network users using common sniffing techniques.

Taking the above into account, is it possible to easily understand how dangerous the decentralized cloud computing is without the right security and privacy controls in place.

The present invention has made a view on such a point and it is a technical object of the invention to provide a system that makes use of a smart contract design and a software module design that integrates with most of the cloud computing platforms. The smart contract and the software module work together to allow cloud computing users to make use of additional cryptographic keys associated with their distributed ledger transactions.

### MEANS FOR SOLVING THE PROBLEM

Using the system the users have the possibility to automatically encrypt and anonymize their data while in transit. Acting this way, the system ensures confidentiality of the software payload.

Using the system the users have the possibility to automatically encrypt their data while at rest and prevent the payload processors from accessing or tampering their data by remotely controlling the unlocking of the virtual machine storage at boot time. Acting this way, the system ensures confidentiality of the software payload.

Using the system the users have the possibility to automatically validate file integrity when their software payload is being transferred and executed. This possible by allowing cryptographic hashes to be associated with distributed ledger transactions. Acting this way, the system ensures integrity of the software payload.

Using the system the users have the possibility to automatically load balance their software payload between multiple payload processors. This is possible by associating multiple instances of the same software payload to a distributed ledger transaction. Acting this way, the system ensures increased availability of the software payload.

### OVERVIEW OF THE SYSTEM

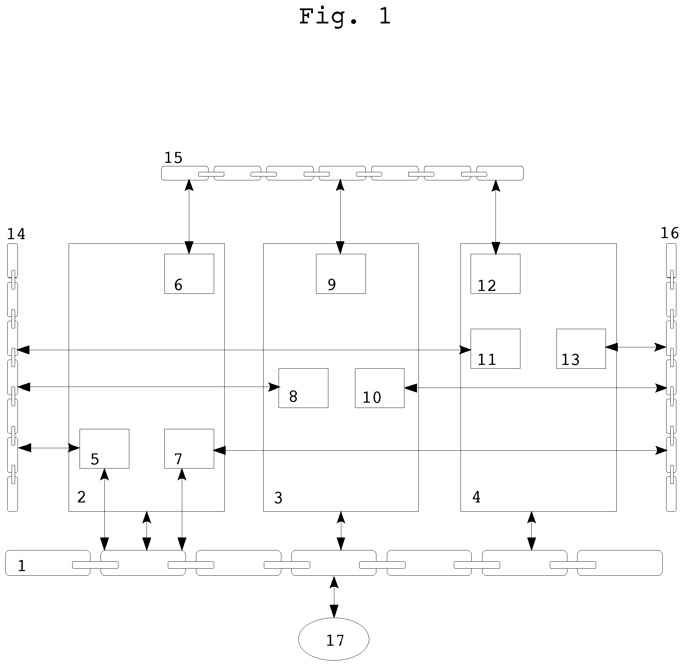

Fig. 1 illustrates one embodiment which may comprise a user (17), a primary blockchain solution (1), multiple payload processors (2, 3, 4) running hypervisor software and several software payloads (5, 6, 7, 8, 9, 10, 11, 12, 13). This embodiment may comprise additional blockchain solutions that interact privately with specific software payloads: blockchains solution (14) interacts with software payloads (5, 8, 11); blockchains solution (15) interacts with software payloads (6, 9, 12); blockchains solution (16) interacts with software payloads (7, 10, 13);

One embodiment may allow users create software payload processing requests which may comprise hardware requirements (CPU, Memory, Storage), software requirements (software payload), cryptographic keys and hashes, other metadata. Other metadata may comprise duration, price, location, hypervisor specific technologies. This information is stored on a distributed ledger to be processed by the blockchain solution.

One embodiment may allow payload processors to create processing offers which may comprise available hardware, cryptographic keys and hashes, other metadata. Other metadata may comprise duration, price, location, hypervisor specific technologies. This information is stored on a distributed ledger to be processed by the blockchain solution.

One embodiment may allow users and payload processors to match payload processing requests and offers and create a binding distributed ledger contract that instructs the payload processor to provide the services as described in the payload processing request. Before, after or during the payload processing one or more cryptocurrency transactions occur according to predefined rules.

One or more embodiments may be using network anonymizing technology like tor/I2P or similar, to communicate with the blockchain solution, the hypervisor software or the software payloads. Acting this way, the system maintains the user's privacy.

One embodiment may allow additional software payloads to be ran by the payload processor, without matching a specific software payload processing request. These payloads may have roles necessary to maintain the performance, availability and legal status of the whole decentralized cloud system.

### HARDWARE DESCRIPTION

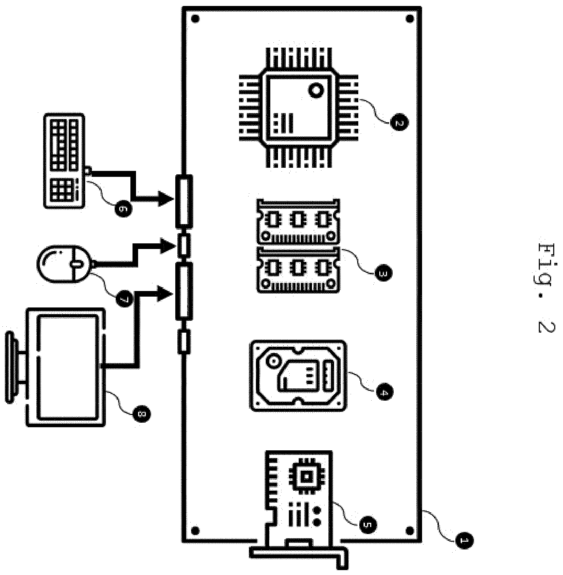

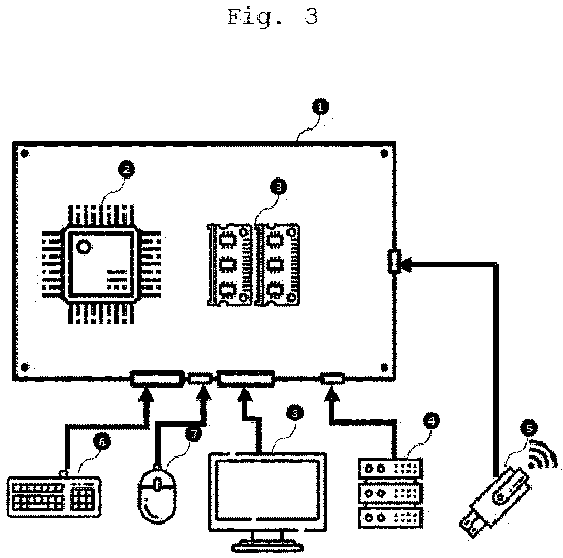

Fig. 2 and Fig. 3 illustrate another embodiment, a hardware appliance (1) part of the invention comprising a processing unit (2), and one or more memory chips (3). This embodiment may additionally comprise internal storage Fig. 2 (4) and external storage Fig. 3 (4), a network interface Fig. 2 (5), an external wireless network interface Fig. 3 (5), an alphanumerical input device (6), a pointer input device (7), a monitor (8) and any associated electronic parts for the components to function together.

### SOFTWARE PAYLOAD CONFIDENTIALITY

The software payload is encrypted before being transferred to the payload processor. The payload processor needs to be able to decrypt and run the software payload on demand. The user can decrypt the data remotely using OCRA (OAUTH Challenge-Response Algorithms) or similar authentication mechanisms.

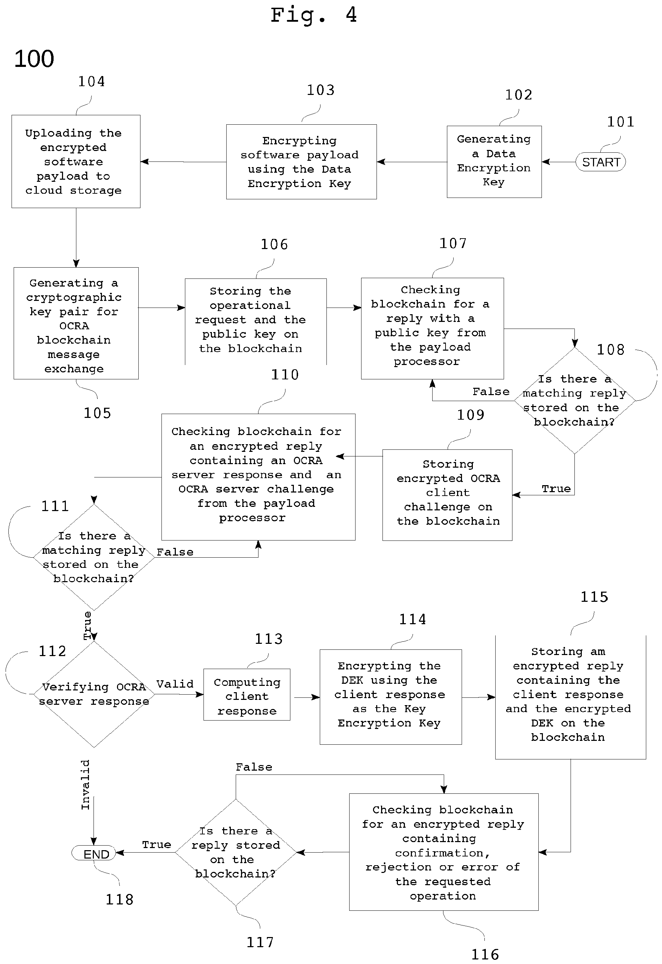

Fig. 4 illustrates a flow diagram of a procedure 100 which uses the distributed ledger as intermediary for the OCRA Multi Challenge-Response using dual key. This ensures additional level of audit trails and may be used as part of one or more embodiments. This process is performed by the requesting user using a software program part of the blockchains solution.

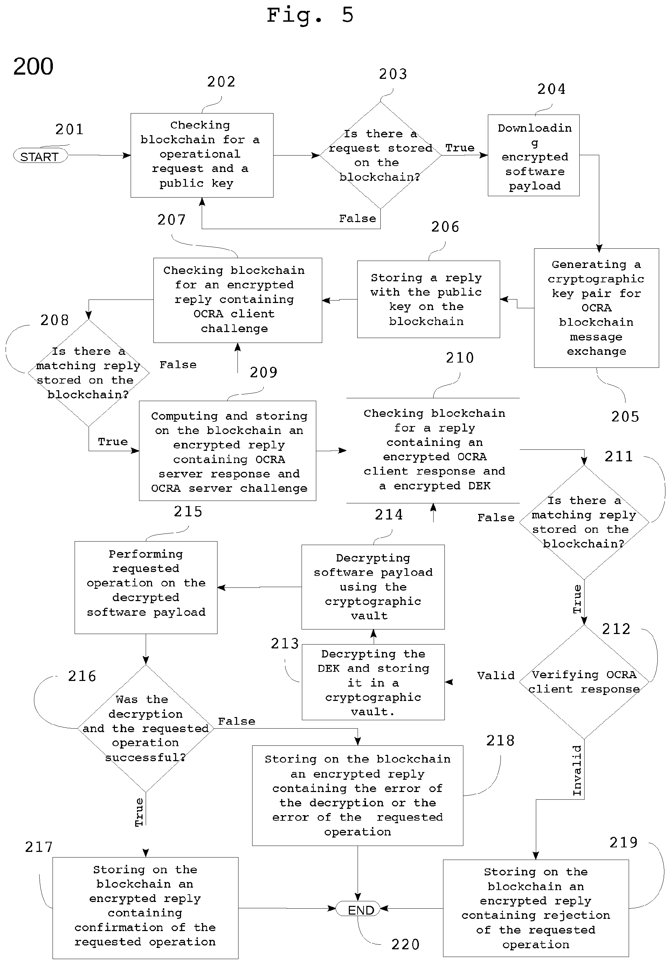

Fig. 5 illustrates a flow diagram of a procedure 200 which may use the distributed ledger as intermediary for the OCRA Multi Challenge-Response using dual key. This ensures additional level of audit trails and may be used as part of one or more embodiments. This process is performed by the payload processor.

In a block 102 a user generates a data encryption key (DEK) using a cryptographic algorithm such as AES 128/ AES 256 or similar. In a block 103 the user encrypts its software payload using the generated DEK.

In a block 104 a user uploads the encrypted payload to cloud storage. The cloud storage can be a regular cloud storage or a decentralized cloud storage such as ipfs or similar. In this block the software payload integrity procedure 300 is being performed.

In a block 105 a user generates a cryptographic key pair used for Open Authentication (OATH) Challenge-Response Algorithm (OCRA). Besides OCRA, the key pair is also used to exchange cryptographic messages using the blockchain solution.

In a block 106 a user stores on a blockchain solution an operational request such as "start" or "stop" which instructs the payload processor to perform such commands on the software payload. Also, in the same block a user stores the public key of the key pair generated at block 105 using the blockchain solution, as well as other associated metadata.

In a block 107 a user reads into the blockchain solution in attempt to find a reply from the payload processor. The reply contains the payload processor public key.

In a decision block 108 is determined if such reply exists. If not, the blockchain solution is checked once more in a do-while style loop. If a matching reply exists, then in a block 109 a user computes an OCRA client challenge, encrypts it using the payload processor public key and stores it using the blockchain.

In a block 110 a user reads into the blockchain solution in attempt to find a reply from the payload processor. The reply contains an OCRA server response and an OCRA server challenge. The private key generated at block 105 will be used to decrypt the data in the reply.

In a decision block 111 is determined if such reply exists. If not, the blockchains solution is checked once more in a do-while style loop. If a matching reply exists, then in a decision block 112 is determined if the OCRA server response is valid.

In a block 112 a user checks if the OCRA server response is cryptographically valid. If is invalid, the process ends. If the server response is valid, in a block 113 a user is computing the client response.

In a block 114 a user is encrypting the DEK using the client response as Key Encryption Key (KEK). In a block 115 a user is encrypting a reply using the payload processor public key and stores it using the blockchain solution. The reply contains the KEK and the client response.

In a block 116 a user reads into the blockchain solution in attempt to find a reply from the payload processor. The reply contains the result of the requested operation which can be a confirmation, a rejection or an error. The user decrypts the reply data using the private key generated at block 105.

In a decision block 117 is determined if such reply exists. If not, the blockchains solution is checked once more in a do-while style loop. If the reply containing the operational request result exists, then the process is ended.

In a block 202 a payload processor checks the blockchain solution for an operation request such as "start" or "stop", a related public key, and the associated metadata.

In a decision block 203 is determined if such request exists. If not, the blockchain solution is checked once more in a do-while style loop. If a matching request exists, in a block 204 a payload processor downloads the encrypted software payload and checks the encrypted software payload integrity using procedure 400.

In a block 205 a payload processor generates a cryptographic key pair used for Open Authentication (OATH) Challenge-Response Algorithm (OCRA). Besides OCRA, the key pair is also used to exchange cryptographic messages using the blockchain solution.

In a block 206 a payload processor creates a reply comprising the public key generated at block 205 and stores it using the blockchain solution.

In a block 207 a payload processor reads into the blockchain solution in attempt to find a reply from the user. The reply contains an encrypted OCRA client challenge. The data from the reply is decrypted using the private key generated at block 205.

In a decision block 208 is determined if such reply exists. If not, the blockchain solution is checked once more in a do-while style loop. If a matching reply exists, then in a block 209 a payload processor computes an OCRA server response and an OCRA server challenge.

Afterwards in block 209, a payload processor encrypts the OCRA server response and the OCRA server challenge using the user's public key and stores the result using the blockchain solution.

In a block 210 a payload processor reads into the blockchain solution in attempt to find a reply from the user. The replay contains and encrypted client response and a encrypted DEK. The data from the reply is decrypted using the private key generated at block 205.

In decision block 211 is determined if such reply exists. If not, the blockchain solution is checked once more in a do-while style loop. If a matching reply exists, then in a decision block 212 is determined if the OCRA client response is valid.

In a decision block 212 a payload processor determines if the OCRA client response is valid. If is invalid, in a block 219 a payload processor computes a rejection message, encrypts it using the user's public key and stores it using the blockchain solution.

In a decision block 212 a payload processor determines if the OCRA client response is valid. If is valid, in a block 213 a payload processor decrypts the DEK and stores it in a cryptographic vault using in a protected space that cannot be accessed in any way by the payload processor outside the hypervisor software process.

In a block 214, a payload processor, using the hypervisor software, decrypts the software payload. In a block 215 a payload processor performs the requested operation on the decrypted software payload.

In a decision block 216 a payload processor determines the result of the requested operation. If the result is successful, in a block 217 a payload processor computes a reply containing a confirmation message using the user's public key, then stores it using the blockchain solution.

In a decision block 216 a payload processor determines the result of the requested operation. If the result is unsuccessful, in a block 218 a payload processor computes a reply containing a error message using the user's public key, then stores it using the blockchain solution.

One or more embodiments may use various cryptographic methods to encrypt the software payload before, during or after it is being uploaded to be processed by the payload processor. The system may store related data on the distributed ledger to establish identity, maintain trust and preserve confidentiality while communicating with the payload processor.

### SOFTWARE PAYLOAD INTEGRITY

Because the software payload is being transferred across the internet between unknown parties, the payload processor must validate the integrity of the software payload before executing it. This may be performed by the payload processor before decryption and after decryption.

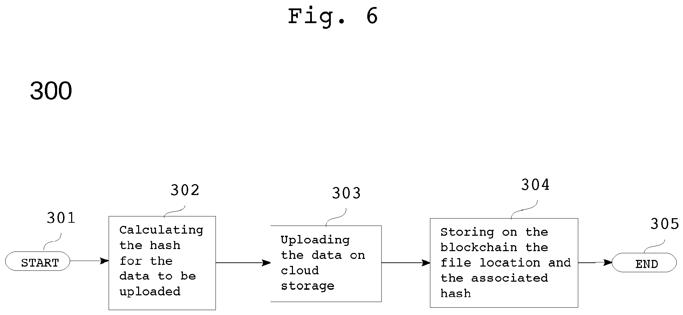

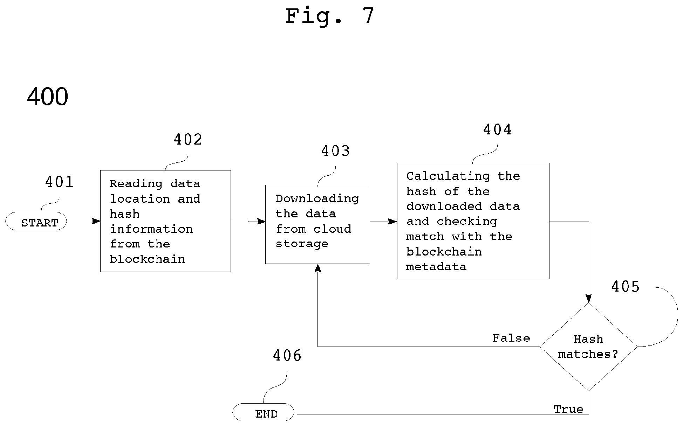

Fig. 6 and Fig. 7 illustrate a flow diagram of two process 300 and 400 which may use the distributed ledger for storing file hashes that can be validated at various levels during payload execution. The user stores within the distributed ledger transaction several hashes that can be checked against by the payload processor before or during the execution of the software payload.

In a block 302 a user calculates the hash of the encrypted software payload using a hash function such as SHA256/SHA512 or similar. In block 303 a user uploads the data to the cloud. The cloud storage can be regular cloud storage or preferably decentralized storage such as ipfs, sia, storj or similar.

In a block 304 a user stores the location of the data, the hash of the data and other related metadata using a blockchain solution.

In a block 402 a payload processor reads from a blockchain solution the encrypted software payload location, the encrypted payload hash and the associated metadata. In a block 403 a payload processor downloads the software payload from the cloud storage.

In a block 404 a payload processor calculates the cryptographic hash of the downloaded software payload. In a decision block 405 a payload processor checks the calculated data against the hash information read from the blockchain. If the information does not match, another download is attempted, and the check is performed once again in a do-while style loop. If the information matches, the process ends.

One or more embodiments may validate the software payload integrity by using the information on the distributed ledger, and this allows multiple software payloads to be part of one another, therefore providing integrity validations at different levels of payload execution.

One or more embodiments may use different cryptographic hashing algorithms to validate file integrity. The system may store related data, including hashes, on the distributed ledger to preserve integrity of data while on transit and while at rest.

### SOFTWARE PAYLOAD HIGH AVAILABILITY

Because the software payload runs on hardware that is provided by the payload processor, the system takes into consideration the possibility that the hardware might fail, therefore rendering the software payload inaccessible by its user.

The system illustrated by Fig. 1 may use one or more distributed ledgers to coordinate multiple instances of the same software payload executed by multiple payload processors.

The user (17) stores within the distributed ledger transaction preferences and metadata used for the cluster-style or similar communication.

Payload processors (2,3,4) read high availability related information from the software payload processing requests and provide the requested services. Payload processors may use one or more blockchain solutions to exchange high availability information.

Software payloads (5,6,7,8,9,10,11,12,13) may use one or more blockchain solutions (14,15,16) to exchange high availability information.

In one embodiment, the communication and coordination between the payload processors may be managed by the hypervisor software, using one or more blockchains. In another embodiment, the communication and coordination between the payload processor may be managed by the software payload itself, using one or more blockchains.

In one or more embodiments the communication may be encrypted and anonymous and may use one or more blockchain solutions. The system may store related data on the distributed ledger to establish network identity of the participants and their roles in the cluster.

### NON-LIMITING EXAMPLES

The discretion of the present application has been presented for purposes of illustration and description but is not intended to be exhaustive or limited to the invention in the form disclosed. Many modifications and variations will be apparent to those of ordinary skill in the art without departing from the scope and spirit of the invention. The embodiment was chosen and described to best explain the principles of the invention and practical application, and to enable others of ordinary skill in the art to understand the invention for various embodiments with various modifications as are suited to the particular use contemplated.

## Claims

1. A computer-implemented method for decentralized computing comprising:
providing, by one or more blockchain processors, a distributed ledger that specifies a plurality of software payload processing offers and a plurality software payload processing requests;
presenting, by one or more blockchain processors, the plurality of payload processing offers to a user's device;
presenting, by one or more blockchain processors, the plurality of payload processing requests to a payload processor device;
receiving, by one or more blockchain processors, a processing request from the user device, wherein the particular processing request comprises minimum hardware requirements and a software payload;
receiving, by one or more blockchain processors, a processing offer from the payload processor device, wherein the particular processing offer comprises available hardware for payload processing services;
appending, by one or more payload processors, metadata describing minimum cryptocurrency cost of each of the payload processing offers, and
receiving, by one or more payload processors, payment for payload processing services through the distributed ledger.

2. The computer-implemented method of claim 1, wherein the payload processing request from the user device is sent using anonymizing technology to maintain the privacy of a user and a user's device.

3. The computer-implemented method of claim 1, further comprising:
appending, by one or more payload processors, metadata describing encryption capabilities for each of the payload processing offers;
appending, by one or more users, metadata describing encryption requirements for each of the payload processing request;
appending, by one or more users, metadata describing a cryptographic public key to the processing request, and
appending, by one or more users, metadata describing a cryptographic hash to the processing request.

4. The computer-implemented method of claim 1, further comprising:
appending, by one or more users, metadata describing a payload concurrency processing value to the processing request.

5. The computer-implemented method of claim 1, wherein the distributed ledger is a blockchain.

6. The computer-implemented method of claim 1, wherein the distributed ledger uses a smart contract.

7. A system for decentralized computing comprising:
a memory;
a processor communicatively coupled to the memory;
providing, a distributed ledger that specifies a plurality of software payload processing offers and a plurality software payload processing requests;
presenting, the plurality of payload processing offers to a user's device;
presenting, the plurality of payload processing requests to a payload processor device;
receiving, a processing request from the user device, wherein the particular processing request comprises minimum hardware requirements and a software payload;
receiving, a processing offer from the payload processor device, wherein the particular processing offer comprises available hardware for payload processing services;
appending, by one or more payload processors, metadata describing minimum cryptocurrency cost of each of the payload processing offers, and
providing, to one or more payload processors, payment for payload processing services through the distributed ledger.

8. The system of claim 7, wherein the payload processing request from the user device is sent using anonymizing technology to maintain the privacy of a user and a user's device.

9. The system of claim 7, further comprising:
appending, by one or more payload processors, metadata describing encryption capabilities for each of the payload processing offers;
appending, by one or more users, metadata describing encryption requirements for each of the payload processing request;
appending, by one or more users, metadata describing a cryptographic public key to the processing request, and
appending, by one or more users, metadata describing a cryptographic hash to the processing request.

10. The system of claim 7, further comprising:
appending, by one or more users, metadata describing a payload concurrency processing value to the processing request.

11. The system of claim 7, wherein the distributed ledger is a blockchain.

12. The system of claim 7, wherein the distributed ledger uses a smart contract.

13. A system for decentralized computing comprising:
a memory;
a processor communicatively coupled to the memory;
providing, a distributed ledger that specifies a plurality of software payload processing offers and a plurality software payload processing requests;
providing, a processing offer from the payload processor device, wherein the particular processing offer comprises available hardware for payload processing services, and
receiving, a processing request from the distributed ledger, wherein the particular processing request comprises minimum hardware requirements and a software payload;
providing, the particular payload processing service, as per payload processing request, along ensuring confidentiality, integrity and availability of the software payload.

14. The system of claim 13, wherein the distributed ledger is a blockchain.

15. The system of claim 14, wherein the distributed ledger uses a smart contract.

16. A computer program product for decentralized computing comprising a computer storage medium having computer readable program code embodied therewith, the computer readable program code configured to perform:
providing, a distributed ledger that specifies a plurality of software payload processing offers and a plurality software payload processing requests;
presenting, the plurality of payload processing offers to a user's device;
presenting, the plurality of payload processing requests to a payload processor device;
receiving, a processing request from the user device, wherein the particular processing request comprises minimum hardware requirements and a software payload;
receiving, a processing offer from the payload processor device, wherein the particular processing offer comprises available hardware for payload processing services.

17. A computer program product for decentralized computing comprising a computer storage medium having computer readable program code embodied therewith, the computer readable program code configured to perform:
providing, a distributed ledger that specifies a plurality of software payload processing offers and a plurality software payload processing requests;
providing, a processing offer from the payload processor device, wherein the particular processing offer comprises available hardware for payload processing services, and
providing, the particular payload processing service, as per payload processing request, along ensuring confidentiality, integrity and availability of the software payload.
